Europäisches Patentamt

(19) European Patent Office

Office européen des brevets

(11) Numéro de publication: **0 143 052**
**B1**

(12) **FASCICULE DE BREVET EUROPEEN**

(45) Date de publication du fascicule du brevet:
**07.01.88**

(51) Int. Cl.⁴: **E 04 H 9/02,** E 04 B 1/36

(21) Numéro de dépôt: **84402331.7**

(22) Date de dépôt: **15.11.84**

(54) Dispositif de centrage et de guidage d'un rouleau de support d'un élément de masse importante.

(30) Priorité: **17.11.83 FR 8318279**

(43) Date de publication de la demande:
**29.05.85 Bulletin 85/22**

(45) Mention de la délivrance du brevet:
**07.01.88 Bulletin 88/1**

(84) Etats contractants désignés:
**BE CH DE GB IT LI NL SE**

(56) Documents cités:
**EP - A - 0 052 549**
**DE - A - 1 658 581**
**DE - A - 3 008 970**
**US - A - 1 761 659**

(73) Titulaire: **FRAMATOME, Tour Fiat 1 place de la Coupole,**
**F-92400 Courbevoie (FR)**

(72) Inventeur: **Helary, Jean-Louis, 12, rue du Commandant**
**Noury, F-44100 Nantes (FR)**
Inventeur: **Grenon, Pierre, 46, route de Vigneux,**
**F-44240 Treilleres (FR)**

(74) Mandataire: **Fort, Jacques, CABINET**
**PLASSERAUD 84, rue d'Amsterdam, F-75009 Paris (FR)**

ACTORUM AG

## Description

L'invention concerne un dispositif de centrage et de guidage d'un rouleau de support d'un élément de masse importante.

Dans la construction d'ouvrages et dans la mise en place de machines, il est souvent nécessaire de mettre en appui des structures ou des matériels de masse importante sur des supports fixes tels que des fondations ou des dalles de support sur le sol.

En particulier, dans le cas de la construction et de l'exploitation des réacteurs nucléaires, on peut être amené, pour des raisons de sécurité, à éviter l'utilisation de dispositifs d'appui tels que des ancrages ou des articulations qui ont la propriété de transmettre intégralement les efforts entre la structure porteuse et l'élément porté. Ces dispositifs d'appui peuvent en effet mettre en danger la structure des matériels supportés dans le cas de sollicitations importantes venant du sol, par exemple dans le cas de séisme.

On a donc imaginé des dispositifs d'appui plus élaborés qui absorbent ou limitent les efforts.

Un tel dispositif d'appui, décrit dans le document FR-A-2494397, comporte deux ensembles de rouleaux cylindriques se déplaçant par roulement sur des pistes profilées usinées sur trois pièces d'appui dont la première repose sur le support fixe, la seconde est intercalée entre les deux jeux de rouleaux et la troisième supporte l'élément de masse importante. Les deux jeux de rouleaux dont les axes sont disposés à 90° sont intercalés entre deux pièces d'appui. Les rouleaux comportent une partie centrale cylindrique et deux parties extrêmes tronconiques qui permettent le centrage des rouleaux sur les pistes de roulement des pièces d'appui, les parties tronconiques coopérant avec des parties correspondantes de ces pièces d'appui disposées à chacune de leurs extrémités dans la direction axiale du rouleau.

Un tel dispositif autorise un déplacement limité de l'élément supporté par rapport au support lié aux fondations avec absorption d'énergie, les pistes de roulement des rouleaux d'appui présentant des parties en pente qui provoquent un soulèvement de l'élément de masse importante par rapport au support lors des déplacements horizontaux relatifs de cet élément de masse importante par rapport au support. Ce dispositif est en outre stable, puisque l'élément a tendance à revenir à sa position basse d'équilibre, par roulement inverse des rouleaux, lorsque la sollicitation extérieure qui a entraîné son mouvement disparaît. Une sollicitation de direction quelconque peut se décomposer en deux déplacements suivant les deux directions perpendiculaires des deux jeux de rouleaux.

Un tel dispositif demande cependant un usinage extrêmement complexe des pièces d'appui et suppose l'utilisation de deux jeux d'au moins deux rouleaux à axes parallèles pour éviter les risques de coincement par mise en travers des rouleaux.

Même dans la conception de ce dispositif avec deux jeux de deux rouleaux à axes parallèles, on n'est pas assuré malgré tout d'un fonctionnement parfait du dispositif, sans coincement des rouleaux, leur guidage dans leur direction de déplacement n'étant pas parfaitement assuré.

De façon plus générale, lorsqu'on déplace une charge très lourde sur un rouleau ou sur un jeu de rouleaux intercalés entre une pièce supportant l'élément de masse importante et une pièce de support en appui sur le sol, ces pièces de support étant usinées pour constituer des pistes de roulement des rouleaux, il est souhaitable d'obtenir un centrage et un guidage parfaits des rouleaux pour éviter tout blocage du dispositif. Le document DE-A-1658581 qui constitue l'état de la technique le plus proche décrit un dispositif d'appui pour pont comportant sur chacune des surfaces d'appui une crémaillère s'engrenant avec un pignon denté monté en rotation, sur l'extrémité d'un rouleau de support, le guidage des rouleaux étant ainsi assuré.

Le but de l'invention est donc de proposer un dispositif de centrage et de guidage d'un rouleau de support d'un élément de masse importante, conforme au préambule de la revendication 1, ce dispositif de centrage et de guidage permettant d'éviter tout risque de coincement par mise en travers du rouleau et tout déplacement latéral relatif entre l'élément de masse importante et le rouleau.

Dans ce but, le dispositif de centrage et de guidage est conforme à la partie caractérisante de la revendication 1.

Afin de bien faire comprendre l'invention, on va maintenant décrire à titre d'exemples non limitatifs, en se référant aux figures jointes en annexe, plusieurs modes de réalisation d'un dispositif de centrage et de guidage suivant l'invention, dans le cas d'un dispositif d'appui anti-sismique à rouleaux croisés, pour le support de casiers de stockage d'assemblages combustibles dans la piscine du combustible usé d'un réacteur nucléaire à eau.

La figure 1 représente une vue de face du dispositif d'appui.

La figure 2 représente une vue de côté du même dispositif d'appui.

La figure 3 est une vue en coupe partielle du dispositif de centrage et de guidage d'un rouleau du dispositif d'appui représenté aux figures 1 et 2.

La figure 4 est une vue en coupe transversale d'un rouleau tel que représenté à la figure 3, dans deux positions différentes lors de son déplacement.

La figure 5 est une section suivant AA de la figure 3 montrant l'ensemble pignon-crémaillère du dispositif de centrage et de guidage.

La figure 6 est une section analogue à la section de la figure 5, dans le cas d'une variante de réalisation de l'ensemble pignon-crémaillère du dispositif de centrage et de guidage.

La figure 7 est une vue en élévation d'un dispositif d'appui comportant deux ensembles de deux rouleaux disposés avec leurs axes à 90°.

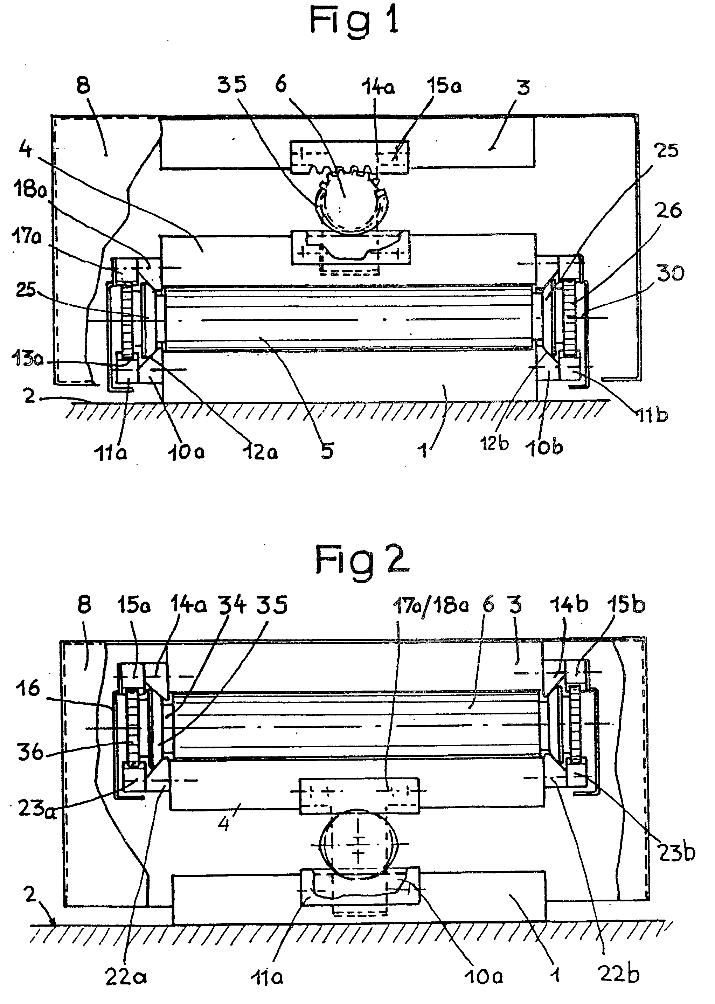

Sur les figures 1 et 2, on voit un ensemble d'appui à rouleaux croisés comportant un dispositif de centrage et de guidage suivant l'invention.

Cet ensemble comporte une pièce de support inférieure 1 reposant elle-même sur le fond 2 de la piscine du compustible, une pièce de support supérieure 3 sur laquelle repose le casier de stockage des assemblages combustibles et une pièce intermédiaire 4 séparant les deux rouleaux de support 5 et 6 dont les axes sont perpendiculaires.

Les pièces de support 1, 3 et 4 sont constituées par de simples plaques planes disposées horizontalement en position de service comme représenté sur les figures 1 et 2. Le rouleau inférieur 5 est intercalé entre la plaque inférieure 1 et la plaque intermédiaire 4 qui constituent pour ce rouleau les pièces de support inférieure et supérieure et le rouleau supérieur 6 est intercalé entre la plaque intermédiaire 4 et la plaque supérieure 3 qui constituent respectivement ses pièces de support inférieure et supérieure.

L'ensemble du dispositif est placé à l'intérieur d'un carter 8 protégeant le dispositif.

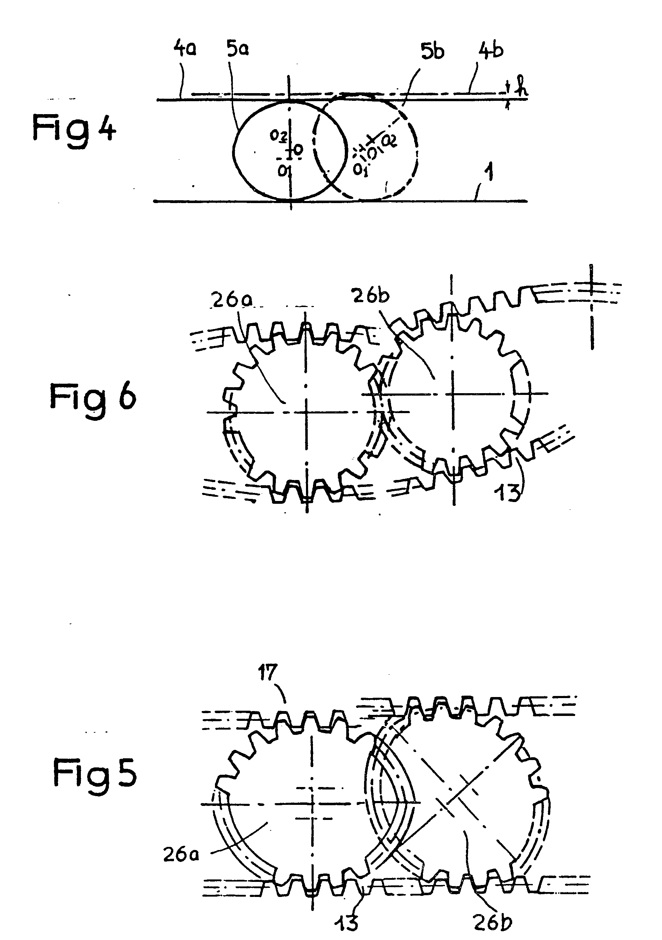

En se reportant à la figure 4, on voit la section transversale du rouleau inférieur 5 dans sa position d'équilibre 5a et dans sa position latérale extrême 5b, dans le cas d'une sollicitation de l'élément supporté par l'ensemble à rouleaux telle qu'un séisme. La section transversale du rouleau 5 est limitée par deux arcs de cercle de rayon identique mais de centres différents. L'arc de cercle inférieur a comme centre 01 et l'arc de cercle supérieur a comme centre 02. 01 et 02 sont disposés de part et d'autre du point d'intersection 0 de la section et de l'axe de rotation du rouleau. Le point 01 est disposé en-dessous du point 0 et le centre 02 au-dessus du point 0. Il en résulte que la section transversale du rouleau 5 comporte un petit axe et un grand axe et que la distance du point 0 au bord de la section du rouleau augmente de façon continue entre le petit axe et le grand axe. Le rouleau 5 est intercalé entre les plaques 1 et 4 dont les surfaces planes respectivement supérieure et inférieure restent constamment en contact avec une génératrice du rouleau.

Lors d'un déplacement du rouleau de 5a en 5b, sous l'effet d'une sollicitation extérieure du dispositif, les génératrices de contact s'éloignent de l'axe de rotation 0 du rouleau et la pièce de support supérieure 4 se déplace verticalement et vers le haut d'une distance h. Cette pièce à surface plane se déplace de 4a en 4b comme il est visible sur la figure 4. Dans sa position latérale extrême 5b, le rouleau 5 est en équilibre instable et lorsque la sollicitation cesse, ce rouleau a tendance à revenir dans sa position d'équilibre stable 5a. Le dispositif absorbe donc de l'énergie pour soulever l'ensemble supporté par le rouleau 5 d'une hauteur h, ce qui a pour effet de limiter les déplacements du dispositif et d'autre part ce dispositif a tendance à revenir dans sa position d'équilibre stable.

Le rouleau 6 comme il est visible sur la figure 1 a une forme identique à la forme du rouleau 5. Dans le cas d'une sollicitation d'une direction quelconque dans le plan horizontal, l'élément supporté pourra se déplacer dans la direction de la sollicitation, par des déplacements combinés des rouleaux 5 et 6 dont des directions de déplacement font un angle de 90°. Ces déplacements s'accompagneront de soulèvement h et h' des dispositifs de support supérieurs correspondants, c'est-à-dire un déplacement vertical total d'une amplitude h + h'. Chaque casier de combustible pourra être supporté par un ensemble d'au moins deux dispositifs tels que représentés sur les figures 1 et 2, placés de façon que les axes de leurs rouleaux ne soient pas alignés mais parallèles.

Pour obtenir un fonctionnement parfait du dispositif, il importe cependant que les rouleaux se déplacent dans une direction parfaitement définie, par rapport aux pièces de support.

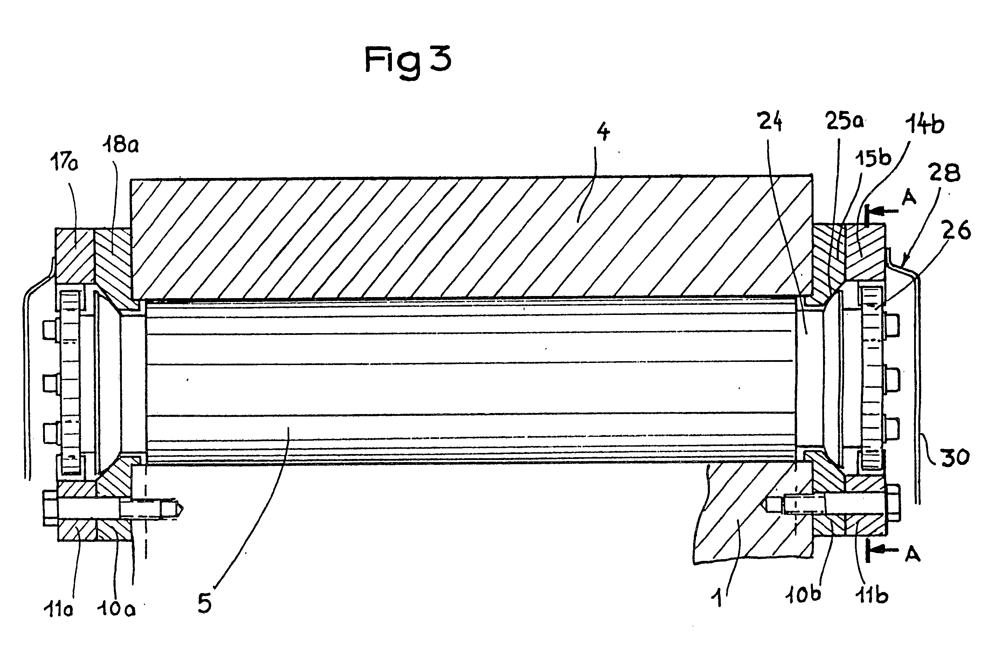

On utilise pour celà un dispositif de centrage et de guidage des rouleaux qui sera décrit ci-dessous en se référant aux figures 1, 2 et 3.

Sur les figures 1 et 2, on voit que les pièces de support 1, 3 et 4 comportent des moyens de centrage et de guidage latéraux en face de moyens correspondants portés par les rouleaux.

Le support inférieur 1 comporte deux pièces de centrage 10a et 10b ainsi que deux crémaillères de guidage 11a et 11b. Ces pièces 10 et 11 sont fixées de façon rigide sur les faces latérales du support 1 perpendiculaire à l'axe du rouleau 5. Ces pièces de centrage et de guidage sont en position centrées sur la plaque support 1 et ont une longueur correspondant au déplacement autorisé du rouleau 5. Les pièces de centrage 10 comportent une piste 12 lisse, inclinée par rapport au plan horizontal et dirigée vers le haut et vers l'extérieur du dispositif, c'est-à-dire dans la direction opposée au rouleau 5. Les pièces de guidage 11 comportent une denture 13 dirigée vers le haut sur leur face supérieure.

La pièce de support supérieure 3 comporte deux pièces de centrage 14 et deux crémaillères 15, la piste de roulement des pièces de centrage 14 étant dirigée vers le bas et vers l'extérieur du dispositif et la denture 16 des crémaillères 15 étant dirigée vers le bas.

La pièce de support intermédiaire 4 comporte d'une part des pièces de centrage et de guidage 17 et 18 disposées symétriquement par rapport aux pièces correspondantes 10 et 11 fixées sur le support inférieur 1, sur l'une de ses faces latérales, et d'autre part des pièces de centrage et de guidage 22 et 23 disposées symétriquement par rapport aux pièces correspondantes 14 et 15 du support supérieur 3, sur ses deux autres faces latérales.

Le rouleau 5, comme il est visible sur les figures 1, 2 et 3 comporte une extrémité 24 sur laquelle est rapporté ou usiné un galet 25 comportant une surface sphérique de roulement 25a. A son extrémité extérieure la partie 24 du rouleau 5 porte également un pignon 26 dont la denture correspond à la denture des crémaillères de guidage 13 et 17.

Les parties de centrage et de guidage respectivement 25 et 26 du rouleau 5 sont placées de façon que le galet 25 puisse rouler sur les pistes de roulement telles que 12 des pièces de centrage 10 et 18 et de façon que le pignon 26 engrène avec les crémaillères des pièces 11 et 17.

Un carter 30 permet de fermer l'extrémité du rouleau pour protéger le dispositif de centrage et de guidage.

Le rouleau 6 est constitué de la même façon que le rouleau 5 et comporte deux extrémités 34 sur lesquelles sont montés un galet de centrage 35 à surfaces sphériques et un pignon 36, ces dispositifs coopérant respectivement avec les pistes de roulement des pièces de centrage 14 et 22 et avec les crémaillères des pistes de guidage 15 et 23.

En réalité, les galets 25 et 35 ont une section transversale, comme il est visible sur les figures 1 et 2, qui reproduit la section transversale des rouleaux 5 et 6 tels que représentés à la figure 4. Pendant les déplacements du rouleau, les galets 25 et 35 restent ainsi en contact avec les pistes correspondantes 10 et 18 et 14 et 22. Les surfaces de roulement des galets 25 et 35 sont donc constituées par deux secteurs sphériques de même rayon mais dont les centres sont décalés comme les centres 01 et 02 des rouleaux 5 et 6. Les rouleaux 5 et 6 sont ainsi centrés par rapport aux pièces de support, quelle que soit la position verticale de ces pièces de support pendant les déplacements des rouleaux 5 et 6.

Ainsi qu'il est visible à la figure 5, les pignons 26 du rouleau inférieur 5 qui ont été représentés dans deux positions 26a et 26b correspondant aux positions 5a et 5b du rouleau 5, ont également une section transversale correspondant à la section du rouleau 5 et du galet 25. Ceci permet de garder les dentures des pignons 26 et des crémaillères telles que 13 usinées sur les pièces 11 et 17 constamment engrenées malgré le déplacement vertical de la pièce 17 comme représenté sur la figure 5. On peut ainsi usiner des crémaillères droites sur les pièces 11 et 17.

Il est bien évident que les pignons 36 du rouleau supérieur 6 sont identiques aux pignons 26 du rouleau inférieur 5.

Sur la figure 6, on a représenté une variante de réalisation de l'ensemble pignons et crémaillères, les pignons étant à section circulaire et les crémaillères courbes. Les crémaillères courbes reproduisent la trajectoire d'un point des rouleaux 5 ou 6 dont la forme est représentée sur la figure 4. La forme courbe de ces crémaillères permet de maintenir engrenés les pignons 26 (ou 36) dans les crémaillères correspondantes, au cours du déplacement du rouleau, malgré l'utilisation de pignons à section circulaire.

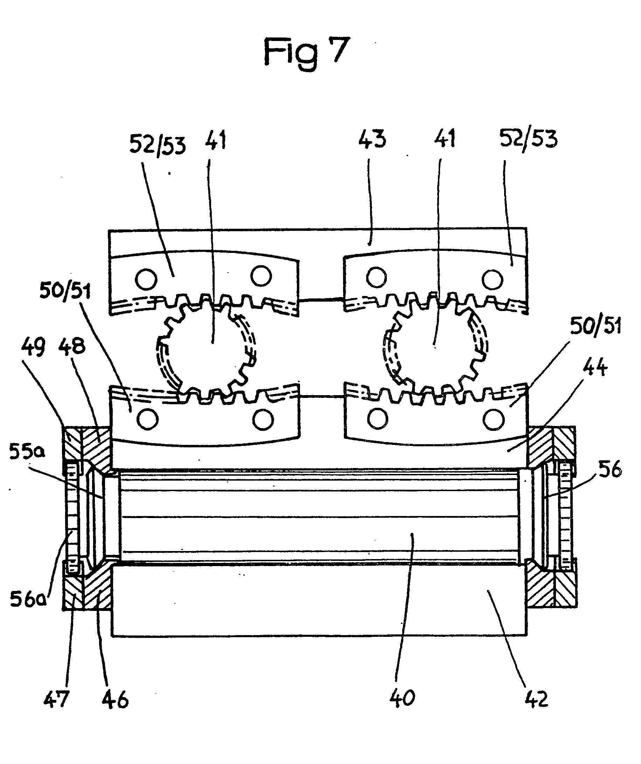

Sur la figure 7, on voit un dispositif d'appui pour un casier d'assemblages combustibles comportant deux ensembles de deux rouleaux 40 et 41, les axes des rouleaux 40 étant perpendiculaires aux axes des rouleaux 41. Ces deux jeux de rouleaux sont eux-mêmes intercalés entre des pièces de support 42, 43 et 44 portant des moyens de centrage et de guidage 46 et 47 pour le support inférieur 42, 48 et 49 ainsi que 50 et 51 pour le support intermédiaire 44, et enfin 52 et 53 pour le support supérieur 43.

Les pistes des pièces de centrage et les crémaillères de guidage 47, 49, 51 et 53 sont curvilignes et reproduisent la trajectoire d'un point des rouleaux 40 et 41 dont la section est comparable à la section des rouleaux 5 et 6 représentés sur la figure 4.

Ces rouleaux 40 et 41 comportent des extrémités portant des galets de guidage tels que 55 et des pignons à section circulaire tels que 56. Un dispositif à deux ensembles de rouleaux tel que représenté à la figure 7 a l'avantage d'être stable et de faciliter la mise en place du casier d'assemblages combustibles qu'il supporte.

En cas de sollicitations extérieures de l'élément supporté, par exemple lors d'un séisme, ces sollicitations se manifestant principalement sous la forme de forces dirigées horizontalement, l'élément subit un déplacement horizontal, quisqu'il est librement mobile dans n'importe quelle direction du plan horizontal, sur les rouleaux. Ce déplacement horizontal s'accompagne d'un déplacement vertical absorbant l'énergie mise en œuvre. Lors de la suppression des sollicitations, le dispositif revient à sa position d'équilibre.

Pendant leur déplacement par roulement, les rouleaux de support sont constamment parfaitement centrés par rapport aux plaques de support correspondantes grâce aux pistes de roulement des pièces de guidage solidaires de ces pièces de support. En effet, les galets de roulement disposés à chacune des extrémités des rouleaux d'appui restent en contact avec des surfaces inclinées de centrage qui les maintiennent dans une position parfaitement centrée par rapport aux faces latérales opposées de la pièce de support correspondante. De même, le déplacement est parfaitement guidé par le déplacement des pignons d'extrémité dans les crémaillères, ces pignons restant constamment engrenés avec les crémaillères correspondantes sur les deux pièces de support entre lesquelles est intercalé le rouleau.

On voit donc que grâce au dispositif selon l'invention, on évite tout coincement des rouleaux par mise en travers de ceux-ci par rapport au dispositif d'appui. De même les rouleaux se déplacent obligatoirement dans une direction parfaitement perpendiculaire aux faces latérales des pièces de support.

Les surfaces sphériques des galets d'appui permettent également d'absorber de petites déformations des rouleaux sous l'effet de la charge.

Mais l'invention ne se limite pas aux modes de réalisation qui ont été décrits; elle en comporte au contraire toutes les variantes, dans le cadre des revendications.

C'est ainsi qu'au lieu de galets de guidage dont la surface de roulement est constituée par l'intersection de deux surfaces sphériques, on peut utiliser des galets de roulement en forme de secteurs sphériques simples associés à des pistes de roulement courbes reproduisant la trajectoire d'un point du cylindre d'appui au cours de sa rotation.

Le mouvement combiné dans la direction horizontale et dans la direction verticale des pièces de support reposant sur les rouleaux peut être obtenu en utilisant des cylindres à section parfaitement circulaire et des pistes de roulement inclinées par rapport au plan horizontal ou courbes. Au lieu de faces planes, les dispositifs de support inférieur, supérieur et intermédiaire comportent alors des pistes inclinées ou courbes comme dans la demande de brevet n° 2 494 397. Les dispositifs de centrage et de guidage associés à un tel dispositif d'appui peuvent être réalisés suivant l'un des modes qui ont été décrits. On peut en particulier utiliser des pistes de guidage et des crémaillères ayant une pente ou une courbure semblable à la pente ou courbure des pistes de roulement des rouleaux d'appui. Si l'amplitude du mouvement vertical de la charge reste faible, on peut également associer à un tel dispositif d'appui comportant des pistes de roulement courbes pour les rouleaux d'appui, des dispositifs de centrage et de guidage comportant des pistes de roulement et des crémaillères droites associées à des galets et à des pignons à sections circulaires.

On peut également imaginer toute combinaison des moyens de centrage et de guidage avec un type ou un autre de rouleau constituant le dispositif d'appui.

On peut utiliser en combinaison deux jeux de pistes de roulement disposées en regard des extrémités axiales d'un rouleau pour son centrage et un seul jeu de crémaillères de guidage disposé en regard de la partie centrale du rouleau. Le rouleau comporte évidemment, dans ce cas, deux galets de centrage à ses extrémités et un pignon à sa partie centrale.

On peut également utiliser des pistes de roulement de centrage disposées en regard de la partie centrale du rouleau et des crémaillères de guidage disposées à chacune des extrémités du rouleau qui peut comporter, dans ce cas, un galet dans sa partie centrale et un pignon à chacune de ses extrémités. Le galet central du rouleau vient en contact avec les deux jeux de pistes de roulement disposées en vis-à-vis sur les surfaces d'appui en vis-à-vis, entre lesquelles est placé le rouleau.

On peut également utiliser des dispositifs de centrage et de guidage selon l'invention dans le cas de dispositifs différents des dispositifs d'appui anti-sismiques à rouleaux croisés.

De tels dispositifs de centrage et de guidage peuvent être utilisés par exemple pour tout moyen de manutention de charge de masse très importante à l'aide de rouleaux de déplacement. Dans le cas de ces applications, les rouleaux peuvent être cylindriques et les pistes planes, si bien que les dispositifs de centrage et de guidage peuvent alors comporter des pignons en forme de secteurs sphériques associés à des pistes de roulement rectilignes et des pignons à section circulaire associés à des crémaillères droites.

De manière générale, le dispositif selon l'invention s'applique dans le cas de toute manutention ou mise en appui d'éléments de masse importante utilisant des rouleaux.

## Revendications

1. Dispositif de centrage et de guidage d'un rouleau de support (5, 6) d'un élément de masse importante, le rouleau (5, 6) disposé avec son axe horizontal étant intercalé entre la surface d'appui supérieure d'une pièce de support inférieure (1, 4) prenant appui sur le sol et la surface inférieure d'appui d'une pièce de support supérieure (4, 3) portant l'élément de masse importante, ces surfaces d'appui étant disposées en vis-à-vis coopérant avec la surface latérale du rouleau (5, 6), pour le support de l'élément avec une possibilité de déplacement horizontal de l'élément par rapport au sol (2), par roulement du rouleau (5, 6) sur les surfaces d'appui, et comportant chacune au moins une crémaillère (11, 15, 17, 23) disposée dans la direction de déplacement du rouleau (5, 6) et placée en vis-à-vis de la crémaillère de la surface d'appui lui faisant face et au moins un pignon (26, 36) dont la denture correspond à la denture de la crémaillère (11, 15, 17, 23), de façon à engrener avec deux crémailllères (11, 15, 17, 23), caractérisé par le fait qu'il comporte, sur chacune des surfaces d'appui des pièces de support (1, 3, 4):
— deux sufaces de centrage (10, 14, 18, 22) disposées dans la direction de déplacement du rouleau (5, 6) et inclinées par rapport au plan horizontal et par rapport à la verticale, avec des inclinaisons opposées, les surfaces de centrage étant placées en vis-à-vis des surfaces de centrage de la surface d'appui lui faisant face, et, sur le rouleau (5, 6), dans des zones correspondant aux surfaces de centrage (10, 14, 18, 22) des surfaces d'appui:
— au moins un galet (25, 35) à surface de roulement sphérique ayant un axe de rotation confondu avec l'axe du rouleau (5, 6) en contact de roulement avec au moins une surface de centrage (10, 14, 18, 22) lors du déplacement du rouleau (5, 6).

2. Dispositif de centrage et de guidage suivant la revendication 1, caractérisé par le fait:
— que les surfaces de centrage (10, 14, 18, 22) sont disposées à chacune des extrémités des pièces de support (1, 3, 4) correspondant aux extrémités axiales du rouleau (5, 6) et dirigées vers l'extérieur, c'est-à-dire dans une direction opposée au rouleau (5, 6),
— que deux crémaillères (11, 15, 17, 23) sont associées à chacune des surfaces d'appui des pièces de support (1, 3, 4) et disposées à chacune des extrémités de ces pièces (1, 3, 4) correspondant aux extrémités axiales du rouleau (5, 6),
— et que deux galets (25, 35) et deux pignons (26, 36) sont associées au rouleau (5, 6) et placés au voisinage des extrémités axiales du rouleau (5, 6).

3. Dispositif de centrage et de guidage suivant l'une quelconque des revendications 1 et 2, dans le cas d'un rouleau d'un dispositif d'appui permettant des mouvements horizontaux de l'élément de masse importante accompagnés de déplacements verticaux, caractérisé par le fait que l'un des éléments de centrage (surface de centrage 10, 14, 18, 22 et galet à surface de roulement sphérique 25, 35) et l'un des éléments de guidage (crémaillère 11, 15, 17, 23 et pignon 26, 36) comportent un profil correspondant à la trajectoire d'un point ou à la forme de la surface du rouleau d'appui, pour maintenir en contact ces éléments pendant le déplacement du rouleau.

4. Dispositif de centrage et de guidage suivant la revendication 3, caractérisé par le fait que le ou les pignons (26, 36) ont une courbe génératrice constituée par deux portions de cercle de même rayon mais de centres différents et que les crémaillères (11, 15, 17, 23) sont droites.

5. Dispositif de centrage et de guidage suivant la revendication 3, caractérisé par le fait que le ou les pignons (26, 36) sont à section circulaire et que les crémaillères (11, 15, 17, 23) sont courbes.

6. Dispositif de centrage et de guidage suivant l'une quelconque des revendications 4 et 5, caractérisé par le fait que le ou les galets de centrage (25, 35) ont une surface de roulement constituée par deux secteurs sphériques de même rayon mais de centres différents et que les pistes de roulement de ces galets sont droites.

7. Dispositif de centrage et de guidage suivant l'une quelconque des revendications 4 et 5, caractérisé par le fait que le ou les galets de centrage (25, 35) ont une surface de roulement en forme de surface sphérique et que les pistes de roulement de ce ou ces galets sont courbes.

8. Dispositif de centrage et de guidage suivant l'une quelconque des revendications 3 à 7, caractérisé par le fait que le rouleau d'appui (5, 6) a une section transversale limitée par deux portions de cercle de même rayon mais de centres différents, les surfaces d'appui des pièces de support étant planes et horizontales.

9. Dispositif de centrage et de guidage suivant l'une quelconque des revendications 3 à 7, caractérisé par le fait que le rouleau d'appui (5, 6) a une section transversale circulaire, les surfaces d'appui comportant des surfaces de roulement inclinées par rapport au plan horizontal.

10. Dispositif de centrage et de guidage suivant l'une quelconque des revendications 2 à 9, dans le cas d'un dispositif d'appui comportant deux cylindres (5, 6) superposés disposés avec leurs axes à 90° intercalés entre trois plaques de support (1, 3, 4), caractérisé par le fait que la plaque inférieure (1) comporte une pièce de centrage et une crémaillère sur deux de ses faces latérales parallèles, que la plaque de support supérieure (3) porte des pièces de centrage et des crémaillères sur ses faces latérales opposées et perpendiculaires aux faces de la première plaque portant les pièces de centrage et les crémaillères et que la plaque de support intermédiaire (4) porte une pièce de centrage (18, 22) et une crémaillère (17, 23) sur chacune de ses faces latérales.

11. Dispositif de centrage et de guidage suivant l'une quelconque des revendications 2 à 9, dans le cas d'un dispositif d'appui comportant un premier ensemble de rouleaux parallèles (40) et un second ensemble de rouleaux parallèles (41) dont les axes sont à 90°, superposés et intercalés entre des plaques support (42, 43 et 44), caractérisé par le fait que la plaque inférieure (42) porte deux ensembles de pièces de centrage et de crémaillères sur deux de ses faces latérales opposées, que la plaque supérieure (43) porte deux ensembles de pièces de guidage et de crémaillères sur deux de ses faces latérales opposées perpendiculaires aux faces latérales portant les pièces de guidage et les crémaillères de la plaque inférieure de support (42) et que la plaque intermédiaire de support (44) porte deux ensembles de pièces de guidage et de crémaillères sur chacune de ses faces.

**Patentansprüche**

1. Zentrier- und Führungsvorrichtung einer ein Element mit erheblicher Masse tragenden Rolle (5, 6), die mit ihrer Achse horizontal ausgerichtet und zwischen einer oberen Auflagefläche eines unteren Trägerteils (1, 4), das auf dem Boden aufliegt und der unteren Auflageoberfläche eines oberen Trägerteils (3, 4) angeordnet ist, das das Element mit erheblicher Masse trägt, wobei die Auflageflächen sich gegenüberliegend angeordnet sind und mit der Seitenfläche der Rolle (5, 6) zum Tragen des Elementes zusammenwirken und wobei die horizontale Verschiebung des Elementes relativ zum Boden (2) durch Rollen der Rolle (5, 6) auf den Auflageflächen möglich ist, und wobei jede Auflagefläche mindestens eine Zahnstange (11, 15, 17, 23), die in der Bewegungsrichtung der Rolle (5, 6) und gegenüber der Zahnstange der auf der gegenüberliegenden Seite angeordneten Auflagefläche angeordnet ist und jede Auflagefläche mindestens ein Zahnrad (26, 36) aufweist, dessen Zahnung der der Zahnstangen (11, 15, 17, 23) derart entspricht, dass diese mit den beiden Zahnstangen (11, 15, 17, 23) in Eingriff stehen, dadurch gekennzeichnet, dass die Vorrichtung auf jeder Auflagefläche der Trägerteile (1, 3, 4) aufweist:
— zwei Zentrierflächen (10, 14, 18, 22), die in der Bewegungsrichtung der Rolle (5, 6) angeordnet und gegenüber der Horizontalen und gegenüber der Vertikalen mit entgegengesetzten Neigungen geneigt sind, wobei die Zentrierflächen gegenüber den Zentrierflächen der gegenüberliegenden Auflageflächen angeordnet sind und wobei die Vorrichtung auf der Rolle (5, 6) in Bereichen, die den Zentrierflächen (10, 14, 18, 22) der Auflageflächen entsprechen:
— mindestens eine Walze (25, 35) mit sphärischer Rollfläche, die eine Drehachse hat, die mit der der Rolle (5, 6) zusammenfällt und in Drehkontakt mit mindestens einer Zentrierfläche (10, 14, 18, 22) während der Bewegung der Rolle (5, 6) steht, aufweist.

2. Zentrier- und Führungsvorrichtung nach Anspruch 1, dadurch gekennzeichnet,
— dass die Zentrierflächen (10, 14, 18, 22) an jedem Ende der Trägerteile (1, 3, 4) angeordnet sind, die den axialen Enden der Rolle (5, 6) entsprechen und die nach aussen hin geführt sind, d. h. in eine zur Rolle (5, 6) entgegengesetzte Richtung,
— dass zwei Zahnstangen (11, 15, 17, 23) jeder Auflagefläche der Trägerteile (1, 3, 4) zugeordnet und an jedem Ende dieser Teile (1, 3, 4) angeordnet sind, das den axialen Enden der Rolle (5, 6) entspricht und

— dass zwei Walzen (25, 26) und zwei Zahnräder (26, 36) der Rolle (5, 6) zugeordnet und in der Nähe der axialen Enden (5, 6) angeordnet sind.

3. Zentrier- und Führungsvorrichtung nach einem der Ansprüche 1 und 2, wobei eine Rolle einer Auflagevorrichtung horizontale Bewegungen des Elementes mit erheblicher Masse in Verbindung mit vertikalen Bewegungen zulässt, dadurch gekennzeichnet, dass eines der Zentrierelemente (Zentrierfläche 10, 14, 18, 22 und Walze mit sphärischer Rollfläche 25, 35) und eines der Führungselemente (Zahnstange 11, 15, 17, 23 und Zahnrad 26, 36) ein Profil aufweisen, das der Trajektorie eines Punktes oder der Form der Oberfläche der Auflagerolle entspricht, um diese Elemente während der Bewegung der Rolle in Kontakt zu halten.

4. Zentrier- und Führungsvorrichtung nach Anspruch 3, dadurch gekennzeichnet, dass das Zahnrad bzw. die Zahnräder (26, 36) eine Erzeugende aufweisen, die aus zwei Kreisabschnitten gleichen Radius, aber unterschiedlicher Mittelpunkte bestehen und dass die Zahnstangen (11, 15, 17, 23) gerade sind.

5. Zentrier- und Führungsvorrichtung nach Anspruch 3, dadurch gekennzeichnet, dass das Zahnrad oder die Zahnräder (26, 36) einen kreisrunden Querschnitt haben und dass die Zahnstangen (11, 15, 17, 23) gekrümmt sind.

6. Zentrier- und Führungsvorrichtung nach einem der Ansprüche 4 und 5, dadurch gekennzeichnet, dass die Zentrierwalzen (25, 35) eine Rollfläche haben, die aus zwei kugelförmigen Abschnitten gleichen Radius, aber unterschiedlicher Mittelpunkte gebildet sind und die Rollflächen dieser Walzen eben sind.

7. Zentrier- und Führungsvorrichtung nach einem der Ansprüche 4 und 5, dadurch gekennzeichnet, dass die Zentrierwalzen (25, 26) eine Rollfläche in Form sphärischer Oberflächen haben und dass die Rollflächen dieser Walze bzw. Walzen gekrümmt sind.

8. Zentrier- und Führungsvorrichtung nach einem der Ansprüche 3 bis 7, dadurch gekennzeichnet, dass die Auflagerolle (5, 6) einen durch zwei Kreisausschnitte begrenzten Querschnitt hat, wobei die Kreisausschnitte den gleichen Radius, aber unterschiedliche Mittelpunkte haben und die Auflageflächen der Trägerteile eben und horizontal sind.

9. Zentrier- und Führungsvorrichtung nach einem der Ansprüche 3 bis 7, dadurch gekennzeichnet, dass die Auflagerolle (5, 6) einen kreisförmigen Querschnitt hat und die Auflageflächen gegenüber der Horizontalen geneigte Rollflächen aufweisen.

10. Zentrier- und Führungsvorrichtung nach einem der Ansprüche 2 bis 9, für den Fall einer Auflagevorrichtung mit zwei übereinanderliegenden Zylindern (5, 6), die mit ihren Achsen um 90° versetzt zwischen drei Trägerplatten (1, 3, 4) angeordnet sind, dadurch gekennzeichnet, dass die untere Platte (1) ein Zentrierstück und eine Zahnstange auf zwei ihrer seitlichen parallelen Fläche aufweist, dass die obere Trägerplatte (3) Zentrierstücke und Zahnstangen auf ihren gegenüberliegenden Seitenflächen senkrecht zu den Flächen der ersten Platte, die Zentrierstücke und Zahnstangen aufweist, angeordnet sind und dass die mittlere Zahnstange (17, 23) auf jeder ihrer Seitenflächen aufweist.

11. Zentrier- und Führungsvorrichtung nach einem der Ansprüche 2 bis 9, für den Fall einer Auflagevorrichtung mit einer ersten Gruppe paralleler Rollen (40) und einer zweiten Gruppe paralleler Rollen (41), deren Achsen um 90° versetzt sind und die übereinander und zwischen Trägerplatten (42, 43, 44) angeordnet sind, dadurch gekennzeichnet, dass die untere Platte (42) zwei Gruppen von Zentrierstücken und Zahnstangen auf zwei ihrer gegenüberliegenden Seitenflächen aufweist, die obere Platte (43) zwei Gruppen von Führungsstücken und Zahnstangen auf zwei ihrer gegenüberliegenden Seitenflächen aufweist, die senkrecht zu den Seitenflächen verlaufen, die die Führungsstücke und Zahnstangen der unteren Trägerplatte (42) tragen und dadurch, dass die mittlere Trägerplatte (44) zwei Gruppen von Führungsstücken und Zahnstangen auf jeder ihrer Flächen trägt.

**Claims**

1. Centering and guiding device for centering and guiding a roller (5, 6) supporting a heavy component, the roller (5, 6) having a horizontal axis being located between the upper bearing surface of a lower supporting component (1, 4) resting on the ground and the lower bearing surface of an upper supporting component (4, 3) carrying the heavy component, said bearing surfaces facing each other and in contact with the surface of the roller (5, 6) for supporting the component with a possibility of horizontal movement of the component relatively to the ground (2) due to rolling of the roler (5, 6) on the bearing surfaces, and each comprising at least one rack (11, 15, 17, 23) arranged in the movement direction of the roller (5, 6) and disposed in front of the rack of the facing bearing surface, and at least one pinion (26, 36) with teeth corresponding to the teeth of the rack (11, 15, 17, 23) so as to mesh with the racks (11, 15, 17, 23), characterized in that it comprises on each bearing surface of the supporting components (1, 3, 4):

— two centering surfaces (10, 14, 18, 22) arranged in the movement direction of the roller (5, 6) and disposed at an angle to the horizontal plane and relatively to the vertical, with opposite slopes,

— said centering surfaces being disposed in front of the centering surfaces of the facing bearing surface, and, on the roller (5, 6), in zones corresponding to the centering surfaces (10, 14, 18, 22) of the bearing surfaces:

— at least one wheel (25, 35) having a spherical rolling surface having a rotating axis in coincidence with the axis of the roller (5, 6) and in rolling contact with at least one centering surface (10, 14, 18, 22) during the movement of the roller (5, 6).

2. Centering and guiding device according to claim 1, characterized by the fact:

- that the centering surfaces (10, 14, 18, 22) are arranged at each end portion of the supporting components (1, 3, 4) corresponding to the axial end portions of the roller (5, 6) and outwardly sloped, i.e. in an opposite direction from the roller (5, 6),

- that two racks (11, 15, 17, 23) are associated to each bearing surface of the supporting component (1, 3, 4) and disposed at each end portion of said components (1, 3, 4) corresponding to axial end portions of the roller (5, 6),

- and that two wheels (25, 35) and two pinions (26, 36) are associated to roller (5, 6) and placed in the proximity of the axial end portions of roller 5, 6).

3. Centering and guiding device according to any one of claims 1 and 2, in the case of a supporting device roller allowing horizontal movement of the heavy component and vertical movements, characterized by the fact that one of the centering components (centering surface 10, 14, 18, 22 and wheel having a spherical rolling surface 25, 35) and one of the guiding components (rack 11, 15, 17, 23 and pinion 26, 36) have a profile corresponding to a point trajectory or the roller wheel surface shape, for maintaining in mutual contact these elements upon occurrence of the rolling movement.

4. Centering and guiding device according to claim 3, characterized by the fact that the pinion or pinions (26, 36) have a generating curve proximating two circular lines with the same radius but different centers and that the racks (11, 15, 17, 23) are straight.

5. Centering and guiding device according to claim 3, characterized by the fact that the pinion or pinions (26, 36) have a circular cross-section and that the racks (11, 15, 17, 23) are curved.

6. Centering and guiding device according to any one of claims 4 and 5, characterized by the fact that the roller wheels (25, 35) have a rolling surface consisting of two parts spherical surfaces with the same radius but different centers and the centering surfaces for this roller wheels are planar.

7. Centering and guiding device according to any one of claims 4 and 5, characterized by the fact that the roller wheel or roller wheels (25, 35) have part spherical rolling surfaces and the centering surfaces of this or these roller wheels are curved.

8. Centering and guiding device according to any one of claims 3 to 7, characterized by the fact that the roller (5, 6) has a cross-section bounded by two part circular lines with the same radius but different centers, the bearing surfaces of the supporting components being flat and horizontal.

9. Centering and guiding device according to any one of claims 3 to 7, characterized by the fact that the roller (5, 6) has a circular cross-section, the bearing surfaces having opposite slopes relative to the horizontal plane from center location.

10. Centering and guiding device according to any one of claims 2 to 9, in the case of a supporting device comprising two superposed cylinders (5, 6) arranged with their axis at 90° from each other and placed between three supporting plates (1, 3, 4), characterized by the fact that the inferior plate (1) comprises a centering component and a rack on two of its lateral parallel faces, that the superior supporting plate (3) has centering pieces and racks on its opposed lateral faces and at a square angle to the faces of the first plate having centering components and the racks and that the intermediate supporting plate (4) has a centering component (18, 22) and a rack (17, 23) on each of its lateral faces.

11. Centering and guiding device according to any one of claims 2 to 9, in the case of supporting device comprising a first set of parallel rollers (40) and a second set of parallel rollers (41) with axis at 90° from the axis of the first set, superposed and placed between supporting plates (42, 43 and 44), characterized by the fact that the inferior plate (42) has two sets of centering components and racks on two of its opposite lateral faces, that the superior plate (43) has two sets of centering components and racks on two of its opposite lateral faces at right angle to the lateral faces having centering components and racks of the supporting inferior plate (42) and that the intermediate supporting plate (44) has two sets of guiding components and racks on each of its faces.

0143052

# Fig 1

# Fig 2

# Fig 3

Fig 4

Fig 6

Fig 5

# Fig 7